# FASCICULE DE BREVET EUROPEEN

(11) **EP 0 798 548 B1**
(45) Date de publication et mention de la délivrance du brevet: **19.06.2002**
(21) Numéro de dépôt: 97400684.3
(22) Date de dépôt: 26.03.1997
(51) Int. Cl.: G01L 9/06, G01H 11/06, G01L 1/18

(54) **Capteur à jauge de contrainte utilisant l'effet piézorésistif et son procédé de fabrication**
Wandler mit piezoresistivem Dehnungsmessstreifen und Herstellungsverfahren dazu
Strain gauged sensor utilising the piezoresistive effect and its fabrication procedure

(30) Priorité: 28.03.1996 FR 9603885
(43) Date de publication de la demande: 01.10.1997
(73) Titulaire: COMMISSARIAT A L'ENERGIE ATOMIQUE, 75015 Paris (FR)
(72) Inventeur: Diem, Bernard, 38130 Echirolles (FR); Viollet-Bosson, Sylvie, 38450 Vif (FR); Touret, Patricia, 38130 Echirolles (FR)
(74) Mandataire: Dubois-Chabert, Guy

(56) Documents cités:
- EP-A- 0 533 551
- WO-A-95/16192
- DE-A- 3 743 080
- FR-A- 2 201 464
- US-A- 3 620 084
- US-A- 4 739 298
- SENSORS AND ACTUATORS A, vol. A45, no. 2, Novembre 1994, LAUSANNE CH, pages 103-108, XP000482614 E. KÄLVESTEN ET AL.: "A SMALL-SIZE SILICON MICROPHONE FOR MEASUREMENTS IN TURBULENT GAS FLOWS"

## Description

La présente invention concerne un capteur à jauge de contrainte utilisant l'effet piézorésistif. Elle concerne également le procédé de réalisation d'un tel capteur et une utilisation comme élément détecteur d'un hydrophone.

Une jauge de contrainte est un élément d'un capteur de grandeur mécanique dont la déformation, engendrée par le phénomène mécanique dont on veut mesurer la grandeur, provoque une variation de sa résistance électrique. De cette variation de résistance électrique, on en déduit la valeur de la contrainte mécanique exercée. Les jauges à semiconducteur basées sur l'effet piézorésistif ont remplacé les jauges métalliques à cause de leur sensibilité nettement meilleure.

Actuellement, les capteurs en silicium micro-usinés sont de plus en plus utilisés en raison de leur faible coût et de leurs performances élevées. Parmi les différents types de capteurs, ceux utilisant une détection à base de jauges de contrainte en silicium mono-cristallin sont sans doute les plus développés car les mieux connus. Il est possible de les classer en deux catégories :
- une première catégorie comprend les capteurs dont les jauges de contrainte sont isolées du substrat par une jonction pn en inverse et réalisées par diffusion ou implantation d'ions dans le substrat semiconducteur,
- une deuxième catégorie comprend les capteurs dont la jauge de contrainte est isolée du substrat semiconducteur, sur laquelle elle est élaborée, par une couche diélectrique. Le substrat utilisé peut être un substrat SOI (silicium sur isolant) de type SIMOX, SDB ou ZMR, la couche diélectrique étant en silice.

Les brevets US-A-4 456 901, US-A-4 739 298 et US-A-4 510 671 divulguent la réalisation de capteurs de cette deuxième catégorie. Le document US-A-4 739 298 divulgue un capteur de pression dont la membrane et son cadre support sont réalisés en silicium. La membrane est surmontée d'une couche épaisse de verre qui sert à effectuer un collage anodique. Le capteur est réalisé par un assemblage de plaques. La jauge de contrainte est réalisée en silicium fortement dopé p, choix lié à l'utilisation d'une étape de gravure chimique sélective.

Les capteurs de la première catégorie ont pour avantage d'être de faible coût tandis que ceux de la deuxième catégorie ont pour avantage d'être plus performants et utilisables à plus haute température. Dans les deux cas, l'orientation cristallographique de la jauge de contrainte est nécessairement identique à celle du substrat.

Les inventeurs de la présente invention sont arrivés à la conclusion que ces capteurs, performants par ailleurs, ne sont pas réalisés de manière optimale. En effet, le coefficient de piézorésistance varie suivant l'orientation du plan du substrat, suivant la direction dans ce plan et suivant le type de dopage du matériau semiconducteur. D'autre part, l'usinage chimique anisotrope du substrat pour réaliser la structure mécanique du capteur est également dépendant de l'orientation cristallographique de celui-ci. Il y a donc interdépendance étroite entre l'élément support et l'élément détection du capteur. Pour une orientation cristallographique donnée du substrat, il est possible d'obtenir une géométrie particulière pour la structure mécanique usinée et une direction particulière pour l'axe sensible de la jauge de contrainte sur cette structure, limitant de ce fait l'optimisation du composant final.

A titre de référence sur le comportement et la dépendance de la piézorésistivité du silicium suivant son orientation cristalline, on peut citer l'article de Y. KANDA intitulé "A Graphical Representation of the Piezoresistance Coefficients in Silicon" et paru dans IEEE Transactions on Electron Devices, Vol. ED-29, n° 1, Janvier 1982. La gravure chimique anisotrope du silicium est décrite dans l'article "Anisotropic Etching of Silicon" de K.E. BEAN paru dans IEEE Transactions on Electron Devices, Vol. ED-25, n° 10, Octobre 1978.

Pour remédier au défaut d'optimisation du composant selon l'art connu, il est proposé selon la présente invention un capteur dont la structure mécanique peut être choisie indépendemment de la jauge de contrainte. Ceci permet d'améliorer l'efficacité du capteur. Cette efficacité peut être rendue optimale en choisissant les orientations cristallographiques pour l'usinage de la jauge de contrainte et de la structure qui lui sert de support.

L'invention a donc pour objet un capteur à jauge de contrainte utilisant l'effet piézorésistif, comportant une structure servant de support à au moins une jauge de contrainte réalisée en matériau semiconducteur, la structure comprenant un substrat en matériau monocristallin, la jauge de contrainte étant fixée sur la structure par des moyens de solidarisation de manière à obtenir ledit capteur, caractérisé en ce que la jauge de contrainte est fixée sur le substrat de la structure par des liaisons interatomiques, la jauge de contrainte étant réalisée en matériau semiconducteur de type de dopage librement choisi et selon un plan cristallographique déterminé afin de favoriser son coefficient de piézorésistivité, le substrat de la structure étant un élément gravé selon un plan cristallographique déterminé pour favoriser sa gravure.

La structure peut être en matériau semiconducteur ou en quartz.

Avantageusement, la jauge de contrainte ou/et son support peuvent être recouverts d'une couche de diélectrique, isolant ainsi les parties semiconductrices de ces deux éléments l'une de l'autre. Les capteurs ainsi réalisés présentent des performances signal/bruit accrues et sont utilisables à haute température.

Avantageusement, la jauge de contrainte et son support sont en silicium. Dans ce cas, si on utilise une couche de diélectrique, celle-ci est en oxyde de silicium SiO₂.

L'invention a aussi pour objet un procédé de réalisation d'au moins un capteur à jauge de contrainte utilisant l'effet piézorésistif, comportant les étapes suivantes :
- gravure d'un premier substrat en matériau semiconducteur de dopage donné pour constituer une structure servant de support à ladite jauge de contrainte,
- réalisation de la jauge de contrainte en matériau semiconducteur,
- fixation de la jauge de contrainte sur la structure pour obtenir ledit capteur,
caractérisé en ce que :
- le premier substrat est gravé selon un plan cristallographique déterminé pour favoriser sa gravure,
- la jauge de contrainte est réalisée en matériau semiconducteur de type de dopage librement choisi et selon un plan cristallographique déterminé afin de favoriser son coefficient de piézorésistivité,
- la fixation de la jauge de contrainte sur la structure est réalisée par des liaisons interatomiques.

Selon une variante de réalisation préférentielle, la jauge est réalisée à partir d'un second substrat en matériau semiconducteur monocristallin de type de dopage librement choisi et comportant une face plane choisie en fonction dudit plan cristallographique déterminé pour la jauge, la face plane étant soumise à une implantation d'ions créant, dans le volume du second substrat et à une profondeur voisine de la profondeur de pénétration des ions, une couche de microbulles gazeuses délimitant, du côté de la face plane, un film mince, les ions étant choisis parmi les ions de gaz rares ou de gaz hydrogène, la température du second substrat étant maintenue au-dessous de la température à laquelle le gaz engendré par les ions implantés peut s'échapper du second substrat par diffusion, puis le second substrat est fixé à la structure par des liaisons interatomiques, la face plane du second substrat étant adjacente à la partie de la structure servant de support à la jauge de contrainte, ensuite le second substrat est soumis à une température suffisante pour créer, par effet de réarrangement cristallin et de pression des microbulles, une séparation entre le film mince et le reste du second substrat, enfin le film mince est gravé pour lui conférer la forme désirée.

L'invention sera mieux comprise et d'autres détails et particularités apparaîtront à la lecture de la description qui va suivre, donnée à titre d'exemple non limitatif, accompagnée des dessins annexés parmi lesquels :
- les figure 1A, 1B, 2A, 2B, 3A, 3B, 4 et 5 représentent des structures en matériau semiconducteur monocristallin pouvant servir de support à une jauge de contrainte, selon la présente invention,
- les figures 6A et 6B sont des vues respectivement de dessus et de côté en coupe d'un capteur de pression pour hydrophone selon la présente invention,
- les figures 7 à 21 illustrent un procédé de réalisation du capteur de pression représenté aux figures 6A et 6B, selon la présente invention.

Dans la suite de la description, la jauge de contrainte sera réalisée à partir d'un film mince de matériau semiconducteur constitué d'une ou de plusieurs couches d'épaisseur homogène et contrôlée et qui est mis en contact intime avec un support que l'on usine en fonction de ses caractéristiques propres. Le film mince peut être de nature différente du support et orienté librement sur celui-ci. La solidarisation de la jauge de contrainte sur le support peut avantageusement se faire par mise en contact intime du film mince sur son support selon le procédé décrit dans le document FR-A-2 681 472. Cependant, il entre également dans le cadre de la présente invention d'utiliser d'autres méthodes pour solidariser la jauge de contrainte (ou les jauges de contrainte le cas échéant) sur son support.

Le procédé de fabrication d'un film mince semiconducteur et sa solidarisation sur un support, selon le document FR-A-2 681 472, consiste à soumettre une plaquette du matériau semiconducteur désiré et comportant une face plane aux étapes suivantes :
- une première étape d'implantation par bombardement de la face plane dudit matériau au moyen d'ions créant, dans le volume de la plaquette et à une profondeur voisine de la profondeur de pénétration desdits ions, une couche de microbulles gazeuses séparant la plaquette en une région inférieure constituant la masse du substrat et une région supérieure constituant le film mince, les ions étant choisis parmi les ions de gaz rares ou de gaz hydrogène et la température de la plaquette étant maintenue au-dessous de la température à laquelle le gaz engendré par les ions implantés peut s'échapper du semiconducteur par diffusion ;
- une deuxième étape de mise en contact intime de la face plane de la plaquette avec un support constitué au moins d'une couche de matériau rigide. Ce contact intime pouvant être réalisé par exemple à l'aide d'une substance adhésive, par l'effet d'une préparation préalable des surfaces et d'un traitement thermique ou/et électrostatique pour favoriser les liaisons interatomiques entre le support et la plaquette ;
- une troisième étape de traitement thermique de l'ensemble plaquette et support à une température supérieure à la température durant laquelle l'implantation a été effectuée et suffisante pour créer par effet de réarrangement cristallin dans la plaquette et de pression des microbulles une séparation entre le film mince et la masse du substrat.

A la suite de ces étapes, on dispose d'un support qui peut être constitué par exemple d'un substrat de silicium d'orientation et de dopage particulier suivant l'application future et d'un film mince constitué par un autre matériau, qui peut être aussi en silicium monocristallin mais possédant une orientation cristalline pouvant être différente, ce film ayant été librement collé suivant une direction judicieuse en fonction d'une utilisation optimale. De plus, ce film peut être séparé du support par une couche de matériau isolant (SiO₂ par exemple) présent sur le film ou sur le support ou sur les deux.

Dans le cas où le contact intime entre le film mince et le support est réalisé par liaison interatomique, une étape supplémentaire de traitement thermique à haute température (par exemple 2 heures à 1100°C) est nécessaire pour assurer un scellement définitif. Cette technique communément appelée scellement direct (SDB) est décrite dans de nombreuses publications, parmi lesquelles on peut citer : "Silicon-to-silicon direct bonding method", M. Shimbo et al. J. Appl. Phys., vol. 60 (8), 15 Octobre 1986 et "Ultra-stable, High-temperature Pressure Sensors Using Silicon Fusion Bonding", K. Petersen et al., Sensors and Actuators, A21-A23 (1990) 96-101.

La gravure chimique anisotrope du silicium monocristallin, couramment utilisée aujourd'hui pour la fabrication de microstructures, résulte d'une différence de vitesse d'attaque entre ses plans cristallographiques. Dans une solution de gravure anisotrope telle que KOH, EDP, TMAH,..., cette vitesse décroît généralement dans l'ordre (100)>(110)>(111). Les cavités ou structures réalisées dans du silicium seront donc délimitées par des bordures qui représentent les plans d'attaque les plus rapides et les plus lents du cristal. Il est donc très intéressant de pouvoir choisir librement l'orientation cristalline du substrat suivant la forme géométrique finale souhaitée de la structure.

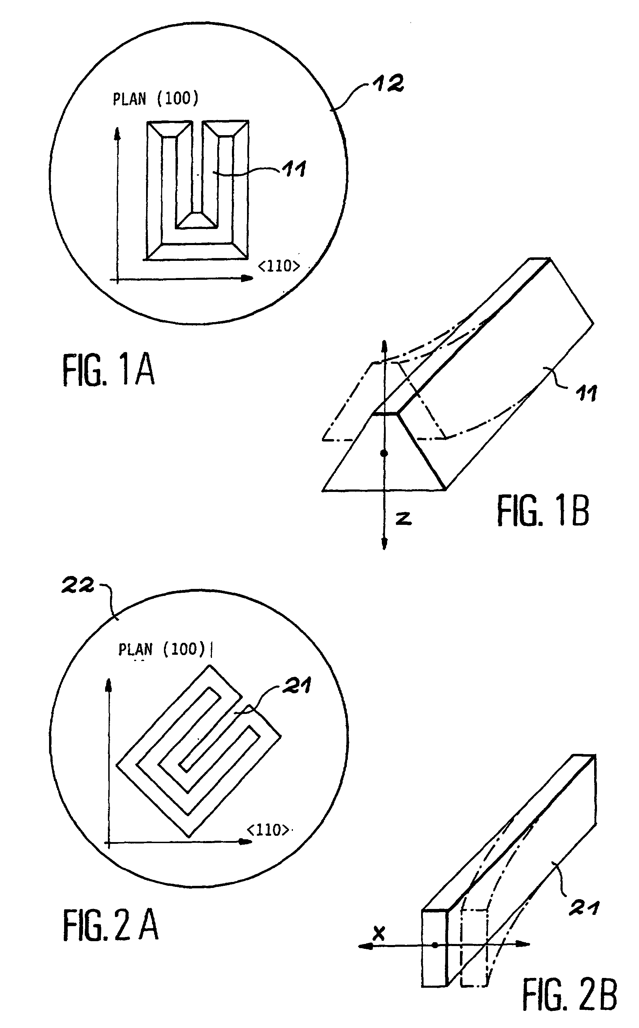

A titre d'exemple, les figures 1A, 1B, 2A, 2B, 3A, 3B, 4 et 5 montrent différents supports possibles dans le cadre de la présente invention.

Sur la figure 1A, une poutre 11 a été gravée dans un substrat 12 d'indices (100) avec un masque de gravure orienté suivant <110>. Dans ce cas, si la poutre est encastrée par l'une de ses extrémités, la déformation privilégiée se fera suivant la direction z comme l'indique la figure 1B où l'on voit mieux la section transversale, en forme de trapèze symétrique, de la poutre 11.

Sur la figure 2A, une poutre 21 a été gravée dans un substrat 22 d'indices (100) avec un masque de gravure orienté suivant <010>. Cette fois, l'axe privilégié sera x, mais la surgravure latérale sera égale à la profondeur gravée.

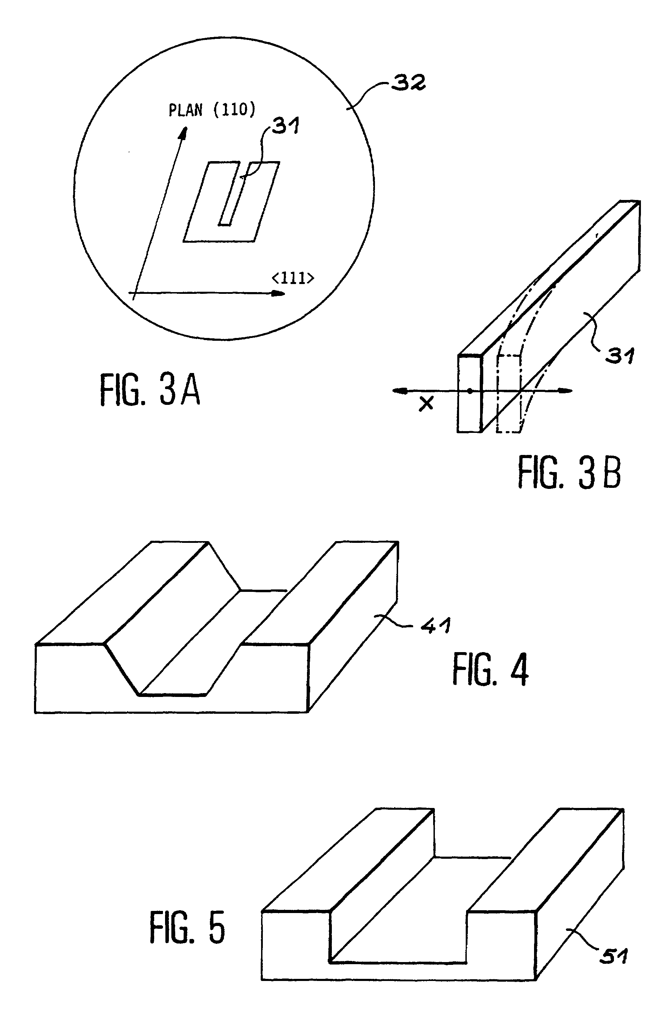

Sur la figure 3A, une poutre 31 a été gravée dans un substrat 32 d'indices (110) avec un masque de gravure orienté suivant <111>, sans surgravure latérale dans ce cas. L'axe sensible de déformation de la poutre 31 est dans la même direction que précédemment mais sur un substrat 32 d'orientation différente.

La figure 4 montre l'allure d'une cavité dans un substrat 41 d'indices (100) avec un masque de gravure orienté suivant <110>.

La figure 5 montre l'allure d'une cavité gravée dans un substrat 51 d'indices (110) avec un masque de gravure orienté suivant <111>.

Ces structures, dessinées et dimensionnées de façon optimale compte tenu des impératifs mécaniques désirés, peuvent servir de supports à des éléments de détection ou jauges de contrainte. L'intérêt de l'invention provient de la possibilité de disposer ces éléments de détection suivant la direction que l'on souhaite, qui sera choisie en fonction de la déformation de la structure, et dont l'orientation cristalline et le type de dopage seront eux aussi adaptés au mieux. Ces éléments seront réalisés dans le film mince rapporté avant la gravure chimique anisotrope du silicium constituant le support et dont l'orientation sur le support sera choisie au moment de la fabrication du substrat.

De façon avantageuse, le scellement du film mince sur le support est renforcé par la mise en oeuvre d'une technique dite de "wafer bonding", assurant une liaison interatomique parfaite. Cette étape est effectuée après la phase de séparation du film mince de la plaquette de silicium par un traitement thermique approprié, généralement 2 heures autour de 1100°C. Le fait de disposer d'un film mince présente alors tout son intérêt par rapport à la technique de "wafer bonding" standard, qui utilise deux plaquettes de silicium épaisses. Le silicium possédant un coefficient de dilatation anisotrope, c'est-à-dire variable suivant l'orientation et la direction, compte tenu de la température élevée des contraintes de dilatation différentielles importantes sont transmises si l'appariement cristallographique des plaquettes n'est pas parfait. Dans le cas de la présente invention, le film mince est collé sur le support au cours de la troisième phase, c'est-à-dire à une température de l'ordre de 500°C, et en raison de sa faible épaisseur pourra se déformer en fonction de la dilatation du support lors de l'étape de recuit haute température, pour ne transmettre que peu ou pas de contraintes résiduelles après retour à température ambiante.

La description sera poursuivie par un exemple précis portant sur la réalisation d'un capteur de pression pour hydrophone.

L'utilisation d'un substrat en silicium d'orientation (100) est très intéressante du point de vue économique et technologique. En effet, cette orientation est la plus utilisée en microélectronique, permettant un coût minimum par plaquette. D'autre part, les directions des plans d'attaque à vitesse lente (111) à la surface du substrat forment entre elles des angles de 90°, favorables en général à la description de structures mécaniques. Les structures réalisées dans un tel substrat auront donc des géométries conduisant à des contraintes mécaniques orientées préférentiellement selon les directions <110>.

Si l'on se réfère au coefficient de piézo-résistance, on peut constater que seul un dopage de type p est adapté aux contraintes dans ces directions. Ceci explique pourquoi, jusqu'à présent, seules des jauges de type p étaient utilisées sur un substrat (100). Cependant, il peut être intéressant de disposer de jauges de contrainte de type n pour des raisons de prise de contact ou de comportement en température ou de valeur absolue du coefficient de piézo-résistance. Dans ce cas, la direction privilégiée pour obtenir un coefficient maximum est <100>, c'est-à-dire à 45° de la direction standard <110> d'un substrat (100).

La présente invention présente donc l'intérêt remarquable de permettre d'obtenir un film mince de silicium suivant une orientation quelconque sur un substrat, et en particulier, en alignant la direction <100> du film mince avec la direction <110> du substrat, tout deux possédant une orientation cristalline (100).

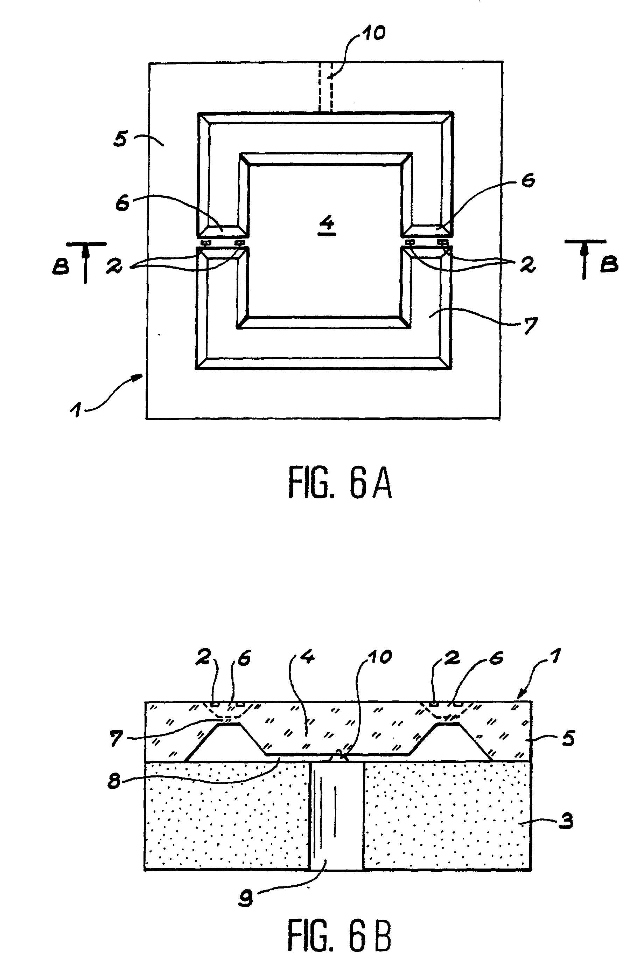

Le capteur de pression pour hydrophone réalisable selon la présente invention est illustré par les figures 6A et 6B. Il est composé, de trois parties associées : une structure mécanique 1 en matériau semiconducteur, servant de support à quatre jauges de contrainte représentées schématiquement sous la référence 2, la structure 1 étant elle-même montée sur un support 3. La structure mécanique 1 comporte un plot central épais 4 quasiment indéformable et relié à un cadre épais 5 par des poutres 6 qui sont ici au nombre de deux mais qui peuvent être plus nombreuses. L'épaisseur et la longueur des poutres sont ajustées au mieux en fonction de l'application voulue, ce qui entre dans les compétences de l'homme du métier. La surface restante entre le plot 4 et le cadre 5 est constituée d'une membrane mince 7 dont le seul rôle est d'assurer l'étanchéité entre les faces supérieure (ou face avant) et inférieure (ou face arrière) du capteur telles qu'elles apparaissent sur la figure 6B. Réalisées dans un substrat de silicium d'orientation (100), les poutres 6 se trouvent naturellement orientées suivant la direction <110>. La face inférieure de la structure 1 présente une dépression centrale 8 pour permettre le débattement correct du plot 4. Le support 3, par exemple en verre du type Pyrex®, est fixé à la structure 1. Il possède un trou central 9 aligné sur le plot 4.

Pour une application hydrophone, il est nécessaire de supprimer la composante continue de la pression. Pour cela, on doit prévoir une liaison entre les faces supérieure et inférieure de la structure 1. La géométrie de cette liaison, définissant la perte de charge en utilisation, peut être calculée par l'homme du métier en fonction du fluide devant remplir l'hydrophone et des caractéristiques désirées, notamment la bande passante inférieure. Pour une utilisation standard, la fréquence de coupure basse intéressante est de l'ordre de 1 Hz, ce qui conduit à un canal 10 d'environ 50 µm de largeur moyenne pour une longueur de 400 µm. Il est très facile d'obtenir, par gravure chimique anisotrope du silicium, une forme en triangle avec un bon contrôle dimensionnel grâce au blocage de l'attaque lorsque les plans d'attaque lents se rencontrent.

Sous l'effet d'une différence de pression entre les deux faces, la structure 1 va se déformer par l'intermédiaire des poutres 6, le plot central épais 4 restant quasiment plan. Les poutres 6 étant encastrées rigidement aux extrémités, les contraintes maximales induites seront donc localisées près de ces encastrements. Dans ces zones sont disposées les jauges de contraintes 2 alignées selon la direction de la poutre (<110> pour le substrat) mais, si elles sont de type n, possédant une direction propre <100>.

On va maintenant décrire les différentes étapes d'un procédé de fabrication d'un tel capteur. Cette réalisation se fait de façon collective bien que les figures suivantes ne portent que sur la réalisation d'un seul capteur.

Le procédé débute par la préparation de la structure 1 conformément à l'enseignement du document FR-A-2 681 472. Pour cela, il est nécessaire de travailler sur deux substrats : un premier substrat qui formera la structure mécanique du capteur de pression et un deuxième substrat qui fournira les jauges de contrainte.

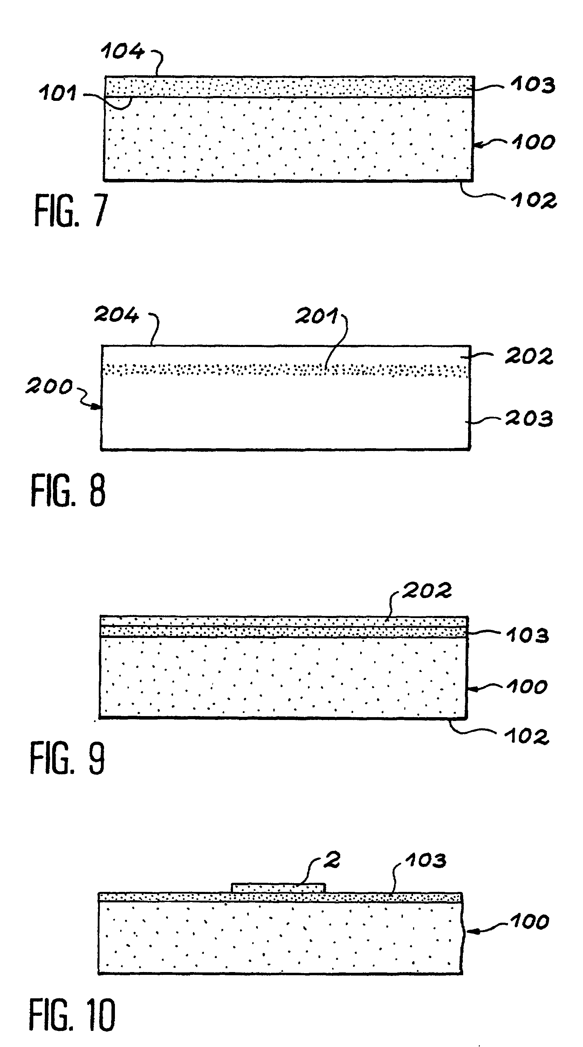

La fig. 7 illustre le premier substrat. Ce premier substrat, portant la référence 100, est en silicium monocristallin d'orientation (100). Il présente des faces supérieure 101 et inférieure 102 polies et possède une épaisseur donnée, par exemple 450 µm. Il est recouvert, au moins sur l'une de ses faces supérieure ou inférieure, d'une couche d'oxyde thermique ou d'un autre composé. Ainsi, la face 101 est recouverte d'une couche d'oxyde SiO₂ 103, obtenue par dépôt ou par croissance d'oxyde, de 0,5 µm d'épaisseur environ et présentant une face libre 104.

La figure 8 illustre le deuxième substrat. Ce deuxième substrat portant la référence 200, est en silicium monocristallin d'orientation (100) et a subi la première étape (étape d'implantation ionique) du procédé décrit dans le document FR-A-2 681 472 et résumé plus haut. En conséquence de cette étape d'implantation ionique, une couche de microbulles gazeuses 201 délimite, dans le volume du substrat 200, un film mince 202 du reste 203 du substrat. L'épaisseur de ce film mince est d'environ 0,2 µm.

Après traitement approprié des faces 104 et 204 des substrats 100 et 200 pour scellement direct, ces faces sont mises en contact conformément à la deuxième étape du procédé décrit dans le document FR-A-2 681 472, en ayant soin si l'on utilise des jauges de contrainte n d'orienter les directions <110> des deux substrats selon un angle de 45°.

La troisième étape de ce même procédé permet de séparer le film mince 202 du substrat 200 tout en le collant sur la face 104 de la couche d'oxyde du substrat 100. Le reste 203 du substrat 200 étant retiré, on obtient la structure représentée à la figure 9. Un traitement thermique complémentaire de cette structure à 1100°C pendant environ 2 heures assure une liaison permanente entre le film mince 202 et le substrat 100 recouvert de sa couche d'oxyde 103. Si nécessaire, ce traitement thermique peut être suivi d'une opération de polissage et de dopage (par implantation ionique ou diffusion) de type n du film mince de silicium. En effet, le traitement thermique est susceptible de modifier le dopage initial de la jauge de contrainte.

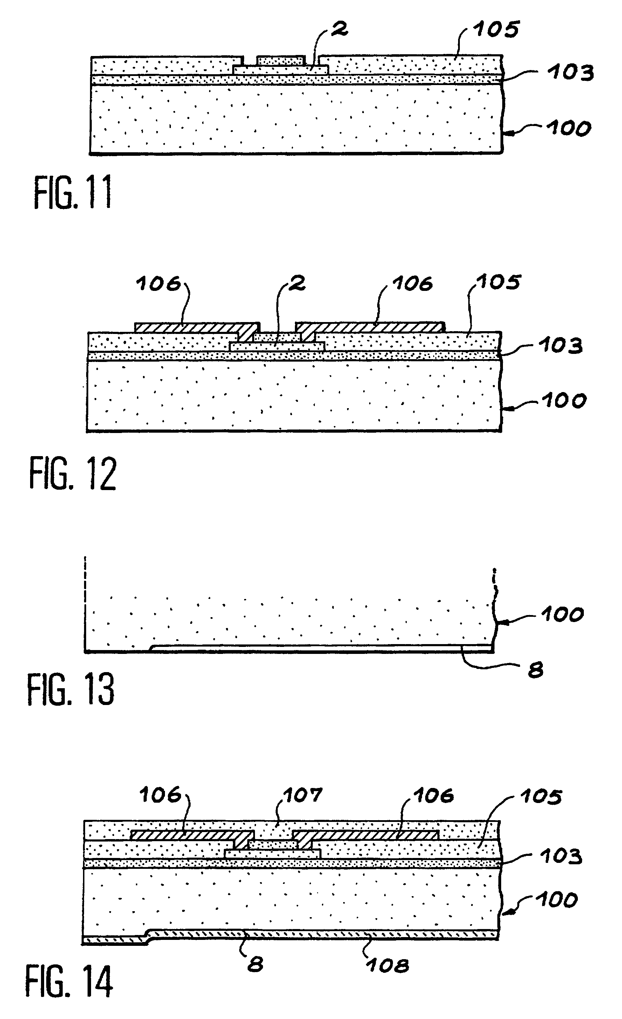

Les figures 10 à 14 illustrent l'obtention des jauges de contrainte. Par souci de clarté, on n'a représenté que la partie de la structure qui comprend la jauge située la plus à gauche sur la figure 6B.

Les jauges de contraintes sont gravées dans le film mince de silicium (le film 202 de la figure 9) par des techniques de photolithographie conventionnelles utilisées en microélectronique. Quatre jauges permettront la réalisation d'un pont de Wheatstone. Le dépôt d'une résine photosensible puis son insolation au travers d'un masque définissant la géométrie désirée, suivie d'une gravure du film mince de silicium (avantageusement, une gravure ionique réactive à l'aide d'un gaz fluoré, par exemple le SF₆) procurent les jauges aux emplacements désirés. La figure 10 montre l'une de ces jauges 2.

Une couche de passivation 105, par exemple en SiO₂ ou en Si₃N₄, d'environ 0,3 µm d'épaisseur, est ensuite déposée sur le substrat 100 côté jauges de contrainte par une technique de décomposition de gaz assisté par plasma (PECVD). Des ouvertures 106 sont pratiquées dans la couche 105, au niveau des extrémités des jauges 2 pour la reprise de contacts, toujours à l'aide d'une photolithogravure (voir la figure 11).

Une métallisation adaptée est déposée et gravée sur la couche 105 pour interconnecter les jauges en pont. Il peut s'agir d'une combinaison Ti/TiN/Al déposée par pulvérisation cathodique. La gravure des couches métalliques peut être réalisée par attaque dans des solutions chimiques appropriées. On obtient ainsi des conducteurs électriques 106 (voir la figure 12).

La face 102 du substrat 100 est traitée par photolithogravure sur une surface correspondant à la membrane 7 et au plot central 4 afin de réaliser la dépression 8. La gravure peut être une gravure ionique réactive effectuée sur une profondeur de 2 à 3 µm (voir la figure 13).

On dépose ensuite sur chaque face principale de la structure obtenue une couche de protection 107, 108 (voir la figure 14). Les couches 107, 108 sont avantageusement en Si₃N₄ et peuvent avoir une épaisseur d'environ 0,5 µm. La technique de dépôt peut être une technique PECVD.

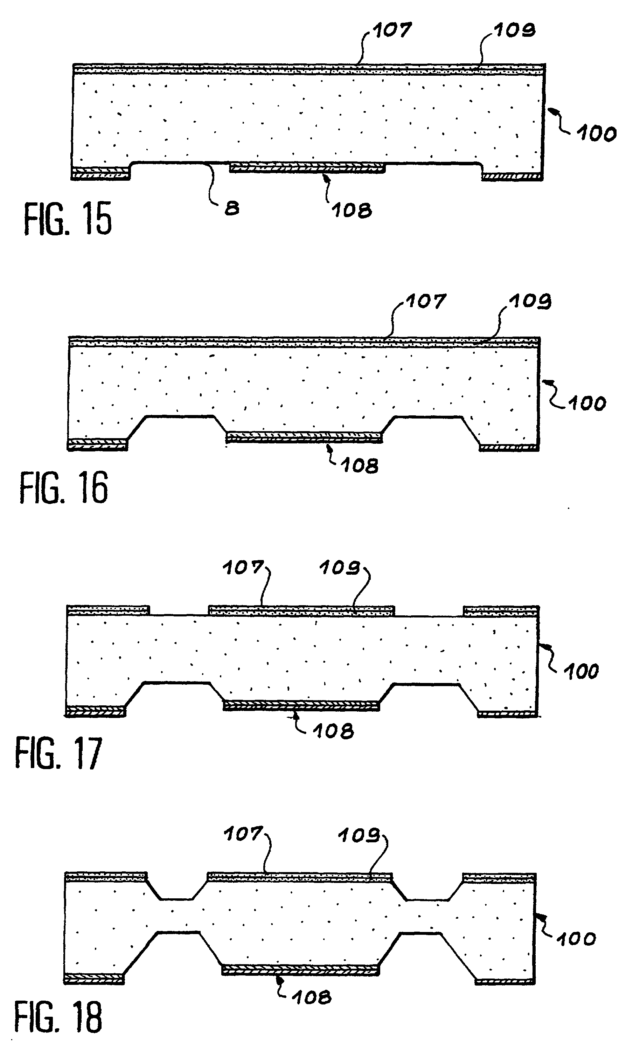

La couche de protection 108 est ensuite masquée et gravée en deux étapes sur environ la moitié de son épaisseur suivant des géométries différentes, par photolithogravure. Le résultat obtenu est illustré par la figure 15 qui montre l'ensemble de la structure. Par souci de simplification, l'ensemble des couches de la face avant de la structure référencées 103, 2, 105 et 106 sur la figure 14, et situé sous la couche de protection 107, a été représenté par une couche 109 non détaillée.

La face arrière de la structure (face opposée aux jauges de contrainte) subit alors une première gravure chimique anisotrope du silicium mis à nu par la gravure de la couche de protection 108. Cette gravure du silicium peut se faire avec une solution basique chaude, par exemple une solution de KOH ou de tétraméthylammoniumhydroxyde (TMAH) à environ 80°C. La profondeur de la gravure est déterminée en fonction de la rigidité désirée pour la structure finale. Par exemple, pour une poutre d'épaisseur finale 150 µm et pour une membrane d'épaisseur 20 µm, la profondeur de la gravure effectuée lors de cette première gravure chimique du silicium peut être de 170 µm. Le résultat obtenu est illustré par la figure 16.

Ensuite, une photolithographie de la couche de protection 107 recouvrant la face avant de la structure est effectuée pour définir la géométrie des éléments poutre et plot central. Elle est suivie d'une gravure ionique réactive de la couche de protection 107 et de l'ensemble référencé 109 dans les endroits non protégés. Le résultat obtenu est illustré par la figure 17.

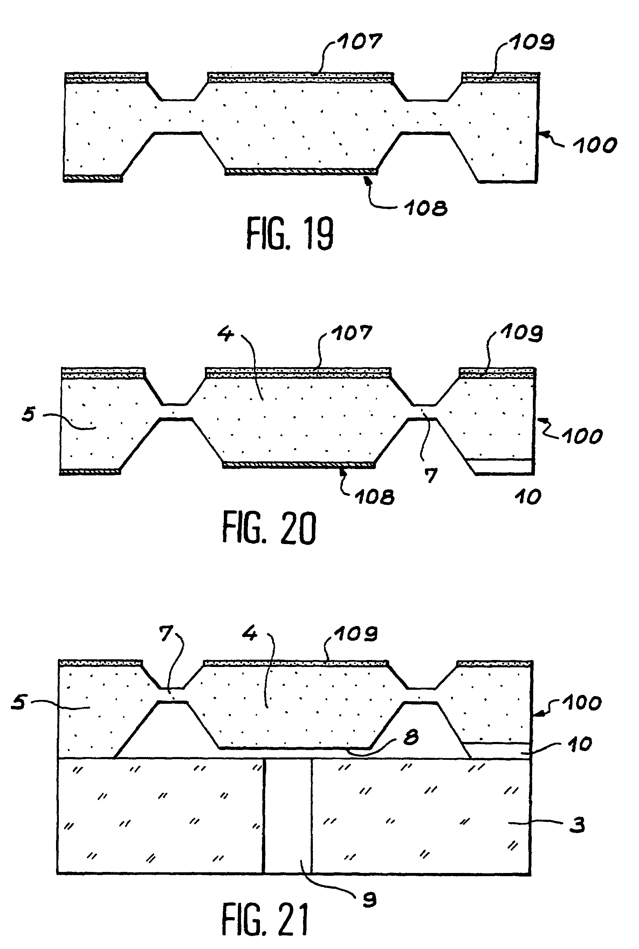

Une seconde gravure chimique anisotrope du silicium est alors entreprise, cette fois en attaque double face, l'épaisseur restant à graver à partir de chaque face étant de 130 µm pour obtenir une épaisseur de membrane de 20 µm. En prévision de la réalisation du canal 10 (voir les figures 6A et 6B), cette seconde gravure est arrêtée au moment où l'on a gravé chaque face d'une profondeur de 80 µm si la profondeur envisagée pour le canal est de 50 µm. Le résultat obtenu est illustré par la figure 18. Les poutres ne sont pas visibles sur cette figure et sur les suivantes. La coupe correspondant à ces figures a été choisie pour mettre en évidence la gravure de la face avant.

La définition de ce canal est réalisée à ce moment sur la face arrière du cadre (référencé 5 sur les figures 6A et 6B) par une gravure de la couche de protection 108 déjà partiellement gravée. Cette opération se fait sans masquage, en attaquant la couche de protection 108 de la face arrière jusqu'à disparition des zones désirées, c'est-à-dire sur environ la moitié de l'épaisseur de cette couche. Le résultat obtenu est illustré par la figure 19.

Une troisième gravure anisotrope du silicium est enfin effectuée sur une profondeur de 50 µm à partir de chaque face pour aboutir au résultat présenté à la figure 20. On dispose donc d'une structure mécanique en silicium constituée par un plot central 4 d'environ 450 µm d'épaisseur, maintenu sur un cadre 5 de même épaisseur par des poutres de 150 µm de hauteur et une membrane 7 de 20 µm d'épaisseur. Le résultat obtenu est illustré par la figure 20 sur laquelle les poutres ne sont pas apparentes.

Après retrait, par gravure ionique réactive, des parties restantes des couches de protection 107 et 108, la structure est scellée sur le support 3 percé du trou 9, en alignant ce trou avec le plot central 4. Si le support 3 est en verre du type Pyrex®, le scellement peut être de type anodique, c'est-à-dire effectué à une température d'environ 400°C en présence d'un champ électrique, comme cela est décrit dans l'article "Field Assisted Glass-Metal Sealing" de G. Wallis et D.I. Pomerants, paru dans la revue Journal of Applied Physics, vol. 40, n° 10, Septembre 1969. Le résultat obtenu est illustré par la figure 21.

L'étape finale consiste à la découpe individuelle des capteurs, leur fabrication étant collective. La découpe s'effectue au niveau du canal pour permettre la liaison entre l'intérieur de la cavité (face arrière) et l'environnement de la face avant. Elle fournit des capteurs individualisés où l'on retrouve la structure 1 servant de support aux jauges de contrainte.

## Revendications

1. Capteur à jauge de contrainte utilisant l'effet piézorésistif, comportant une structure (1) servant de support à au moins une jauge de contrainte (2) réalisée en matériau semiconducteur, la structure (1) comprenant un substrat (100) en matériau monocristallin, la jauge de contrainte (2) étant fixée sur la structure (1) par des moyens de solidarisation de manière à obtenir ledit capteur, **caractérisé en ce que** la jauge de contrainte (2) est fixée sur le substrat (100) de la structure par des liaisons interatomiques, la jauge de contrainte étant réalisée en matériau semiconducteur de type de dopage librement choisi et selon un plan cristallographique déterminé afin de favoriser son coefficient de piézorésistivité, le substrat (100) de la structure étant un élément gravé selon un plan cristallographique déterminé pour favoriser sa gravure.

2. Capteur selon la revendication 1, **caractérisé en ce que** le substrat (100) est en matériau semiconducteur de dopage donné.

3. Capteur selon la revendication 1, **caractérisé en ce que** le substrat (100) est en quartz.

4. Capteur selon la revendication 1, **caractérisé en ce que** la jauge de contrainte (2) est en silicium.

5. Capteur selon l'une des revendications 1 ou 2, **caractérisé en ce qu'**une couche de diélectrique (103) supportée par le substrat (100) et/ou par la jauge de contrainte (2) sépare la jauge de contrainte (2) de la structure (1) formant support.

6. Capteur selon l'une des revendications 1 ou 2, **caractérisé en ce que** le substrat (100) et la jauge de contrainte (2) sont en silicium.

7. Capteur selon l'une quelconque des revendications précédentes, **caractérisé en ce que** la fixation de la jauge de contrainte (2) sur la structure (1) est réalisée selon une orientation choisie en fonction de la déformation que subira la structure (1) lors de l'orientation du capteur.

8. Procédé de réalisation d'au moins un capteur à jauge de contrainte utilisant l'effet piézorésistif, comportant les étapes suivantes :
- gravure d'un premier substrat (100) en matériau semiconducteur de dopage donné pour constituer une structure (1) servant de support à ladite jauge de contrainte (2),
- réalisation de la jauge de contrainte (2) en matériau semiconducteur,
- fixation de la jauge de contrainte (2) sur la structure (1) pour obtenir ledit capteur,
**caractérisé en ce que** :
- le premier substrat (100) est gravé selon un plan cristallographique déterminé pour favoriser sa gravure,
- la jauge de contrainte (2) est réalisée en matériau semiconducteur de type de dopage librement choisi et selon un plan cristallographique déterminé afin de favoriser son coefficient de piézorésistivité,
- la fixation de la jauge de contrainte (2) sur la structure (1) est réalisée par des liaisons interatomiques.

9. Procédé selon la revendication 8, **caractérisé en ce que** la jauge (2) est réalisée à partir d'un second substrat (200) en matériau semiconducteur monocristallin de type de dopage librement choisi et comportant une face plane (204) choisie en fonction dudit plan cristallographique déterminé pour la jauge, la face plane (204) étant soumise à une implantation d'ions créant, dans le volume du second substrat (200) et à une profondeur voisine de la profondeur de pénétration des ions, une couche de microbulles gazeuses (201) délimitant, du côté de la face plane (204), un film mince (202), les ions étant choisis parmi les ions de gaz rares ou de gaz hydrogène, la température du second substrat (200) étant maintenue au-dessous de la température à laquelle le gaz engendré par les ions implantés peut s'échapper du second substrat par diffusion, puis le second substrat est fixé à la structure par des liaisons interatomiques, la face plane du second substrat étant adjacente à la partie de la structure servant de support à la jauge de contrainte (2), ensuite le second substrat (200) est soumis à une température suffisante pour créer, par effet de réarrangement cristallin et de pression des microbulles, une séparation entre le film mince (202) et le reste (203) du second substrat, enfin le film mince (202) est gravé pour lui conférer la forme désirée.

10. Procédé selon l'une des revendications 8 ou 9, **caractérisé en ce qu'**il comporte une étape préalable de réalisation d'une couche de diélectrique (103) sur le premier substrat (100) et/ou sur la jauge de contrainte, cette couche de diélectrique étant destinée à isoler ladite structure de la jauge de contrainte lors de leur fixation.

11. Procédé selon l'une quelconque des revendications 8 à 10, **caractérisé en ce que** le matériau semiconducteur utilisé pour réaliser une jauge de contrainte (2) et son support (1) est le silicium monocristallin.

12. Procédé selon la revendication 11 lorsqu'elle est rattachée à la revendication 10, **caractérisé en ce que** la couche de diélectrique est en silice.

13. Utilisation du capteur selon l'une quelconque des revendications 1 à 7 ou réalisé selon l'une quelconque des revendications 8 à 12 comme élément détecteur d'un hydrophone.

## Patentansprüche

1. Wandler mit piezoresistivem Dehnungsmessstreifen, umfassend eine Struktur (1), die als Träger für mindestens einen aus halbleitendem Material hergestellten Dehnungsmessstreifen (2) dient, wobei die Struktur (1) ein Substrat (100) aus einkristallinem Material umfasst und der Dehnungsmessstreifen (2) durch Verbindungsmittel auf der Struktur (1) derart fixiert ist, dass der genannte Wandler erhalten wird, **dadurch gekennzeichnet, dass** der Dehnungsmessstreifen (2) auf dem Substrat (100) der Struktur durch Interatombindungen fixiert ist, wobei der Dehnungsmessstreifen aus halbleitendem Material von frei gewähltem Dotierungstyp und entsprechend einer kristallographischen Ebene ausgeführt ist, die festgelegt ist um seinen Piezoresistivitätskoeffizienten zu fördern, und das Substrat (100) der Struktur ein entsprechend einer kristallographischen Ebene, die festgelegt ist um seine Ätzung zu fördern, geätztes Element ist.

2. Wandler nach Anspruch 1, **dadurch gekennzeichnet, dass** das Substrat (100) aus halbleitendem Material gegebener Dotierung ist.

3. Wandler nach Anspruch 1, **dadurch gekennzeichnet, dass** das Substrat (100) aus Quarz ist.

4. Wandler nach Anspruch 1, **dadurch gekennzeichnet, dass** der Dehnungsmessstreifen (2) aus Silicium ist.

5. Wandler nach einem der Ansprüche 1 oder 2, **dadurch gekennzeichnet, dass** eine von dem Substrat (100) und/oder von dem Dehnungsmessstreifen (2) getragene Schicht von Dielektrikum (103) den Dehnungsmessstreifen (2) von der den Träger bildenden Struktur (1) trennt.

6. Wandler nach einem der Ansprüche 1 oder 2, **dadurch gekennzeichnet, dass** das Substrat (100) und der Dehnungsmessstreifen (2) aus Silicium sind.

7. Wandler nach einem der vorhergehenden Ansprüche, **dadurch gekennzeichnet, dass** die Fixierung des Dehnungsmessstreifens (2) auf der Struktur (1) entsprechend einer Orientierung ausgeführt ist, die in Abhängigkeit von der Deformation, welche die Struktur (1) bei der Orientierung des Wandlers erfährt, gewählt ist.

8. Verfahren zur Herstellung mindestens eines Wandlers mit piezoresistivem Dehnungsmessstreifen, umfassend die folgenden Schritte:
- Ätzen eines ersten Substrats (100) aus halbleitendem Material gegebener Dotierung um eine Struktur (1) zu bilden, die als Träger für den genannten Dehnungsmessstreifen (2) dient,
- Herstellen des Dehnungsmessstreifens (2) aus halbleitendem Material,
- Fixieren des Dehnungsmessstreifens (2) auf der Struktur (1) um den genannten Wandler zu erhalten,
**dadurch gekennzeichnet, dass**:
- das erste Substrat (100) entsprechend einer kristallographischen Ebene geätzt wird, die festgelegt ist um seine Ätzung zu fördern,
- der Dehnungsmessstreifen (2) aus halbleitendem Material von frei gewähltem Dotierungstyp und entsprechend einer kristallographischen Ebene hergestellt wird, die festgelegt ist um seinen Piezoresistivitätskoeffizienten zu fördern,
- die Fixierung des Dehnungsmessstreifens (2) auf der Struktur (1) durch Interatombindungen hergestellt wird.

9. Verfahren nach Anspruch 8, **dadurch gekennzeichnet, dass** der Messstreifen (2) aus einem zweiten, eine ebene, in Abhängigkeit von der genannten, für den Messstreifen bestimmten kristallographischen Ebene gewählte Oberfläche (204) aufweisenden Substrat (200) aus einkristallinem halbleitendem Material von frei gewähltem Dotierungstyp hergestellt wird, wobei die ebene Oberfläche (204) einer lonenimplantation unterzogen wird, die im Volumen des zweiten Substrats (200) und auf einer Tiefe nahe der Eindringtiefe der lonen eine Schicht gasförmiger Mikroblasen (201) erzeugt, die auf der Seite der ebenen Oberfläche (204) eine dünne Schicht (202) begrenzt, die lonen unter den lonen von Edelgasen oder von Wasserstoffgas gewählt sind und die Temperatur des zweiten Substrats (200) unterhalb der Temperatur gehalten wird, bei welcher das von den implantierten lonen erzeugte Gas durch Diffusion von dem zweiten Substrat entweichen kann, dass dann das zweite Substrat durch Interatombindungen auf der Struktur fixiert wird, wobei die ebene Oberfläche des zweiten Substrats an dem Teil der Struktur anliegt, der als Träger für den Dehnungsmessstreifen (2) dient, dass anschließend das zweite Substrat (200) einer Temperatur ausgesetzt wird, die ausreicht um durch die Wirkung von Kristallumordnung und Druck der Mikroblasen eine Trennung zwischen der dünnen Schicht (202) und dem Rest (203) des zweiten Substrats zu bewirken, und dass schließlich die dünne Schicht (202) geätzt wird um ihr die gewünschte Form zu verleihen.

10. Verfahren nach einem der Ansprüche 8 oder 9, **dadurch gekennzeichnet, dass** es einen vorhergehenden Schritt der Herstellung einer Schicht von Dielektrikum (103) auf dem ersten Substrat (100) und/oder auf dem Dehnungsmessstreifen umfasst, wobei diese Schicht von Dielektrikumg dazu bestimmt ist, die genannte Struktur bei ihrer Fixierung von dem Dehnungsmessstreifen zu isolieren.

11. Verfahren nach einem der Ansprüche 8 bis 10, **dadurch gekennzeichnet, dass** das halbleitende Material, das verwendet wird, um einen Dehnungsmessstreifen (2) und seinen Träger (1) herzustellen, einkristallines Silicium ist.

12. Verfahren nach Anspruch 11, wenn dieser mit Anspruch 10 verbunden ist, **dadurch gekennzeichnet, dass** die Schicht von Dielektrikum aus Siliciumdioxid ist.

13. Verwendung des Wandlers nach einem der Ansprüche 1 bis 7 oder hergestellt nach einem der Ansprüche 8 bis 12 als Detektorelement eines Hydrophons.

## Claims

1. Strain gauge sensor using the piezoresistive effect, comprising a structure (1) serving as a support for at least one strain gauge (2) made from a semiconductor material, the structure (1) comprising a monocrystalline material substrate (100), said strain gauge (2) being fixed to the structure (1) by joining means so as to obtain said sensor, **characterized in that** the strain gauge (2) is fixed to the substrate (100) of the structure by interatomic links, the strain gauge being made from a semiconductor material with a freely chosen doping type and in accordance with a given crystallographic plane in order to aid its piezoresistivity coefficient, the substrate (100) of the structure being an element etched in accordance with a given crystallographic plane in order to aid the etching thereof.

2. Sensor according to claim 1, **characterized in that** the substrate (100) is of a semiconducting material with a given doping.

3. Sensor according to claim 1, **characterized in that** the substrate (100) is made of quartz.

4. Sensor according to claim 3, **characterized in that** the strain gauge (2) is made of silicon.

5. Sensor according to either of the claims 1 and 2, **characterized in that** a dielectric layer (103) supported by the substrate (100) and/or the strain gauge (2), separates the strain gauge (2) from the structure (1) forming the support.

6. Sensor according to either of the claims 1 and 2, **characterized in that** the substrate (100) and the strain gauge (2) are made of silicon.

7. Sensor according to any one of the preceding claims, **characterized in that** the strain gauge (2) is bonded to the structure (1) with an orientation chosen as a function of the deformation that will be applied to the structure (1) during orientation of the sensor.

8. Process for producing at least one strain gauge sensor using the piezoresistive effect, comprising the following stages:
- etching a first substrate (100) of a semiconductor material with a given doping in order to form a structure (1) serving as a support for said strain gauge (2),
- producing the semiconductor material strain gauge (2),
- fixing the strain gauge (2) to the structure (1) to obtain said sensor,
**characterized in that**:
- the first substrate (100) is etched in accordance with a given crystallographic plane in order to aid its etching,
- the strain gauge (2) is made from a semiconductor material having a freely chosen doping type and in accordance with a given crystallographic plane in order to aid its piezoresistivity coefficient,
- the strain gauge (2) is fixed to the structure (1) by interatomic links.

9. Process according to claim 8, **characterized in that** the gauge (2) is made from a second monocrystalline semiconductor material substrate (2) having a freely chosen doping type and having a planar face (204) chosen as a function of the crystallographic plane determined for the gauge, the planar face (204) being subject to an ion implantation creating in the volume of the second substrate (200) and at a depth close to the ion penetration depth, a gaseous microbubble layer (201) defining, on the side of the planar face (204), a thin film (202), the ions being chosen from among ions of rare gases or hydrogen gas, the temperature of the second substrate (200) being kept below the temperature at which the gas produced by the implanted ions can escape from the second substrate by diffusion, then the second substrate is fixed to the structure by interatomic links, the planar face of the second substrate being adjacent to the portion of the structure serving as a support for the strain gauge (2), the the second substrate (200) is subject to an adequate temperature for creating, by crystalline rearrangement and the pressure of the microbubbles, a separation between the thin film (202) and the remainder (203) of the second substrate, so that the thin film (202) is etched in order to give it the desired shape.

10. Process according to either of the claims 8 and 9, **characterized in that** it involves a prior stage of producing a dielectric layer (103) on the first substrate (100) and/or on the strain gauge, said dielectric layer isolating said structure from the strain gauge during the fixing thereof.

11. Process according to any one of the claims 8 to 10, **characterized in that** the semiconductor material used for producing a strain gauge (2) and its support (1) is monocrystalline silicon.

12. Process according to claim 11 when it is dependent on claim 10, **characterized in that** the dielectric layer is made from silica.

13. Use of the sensor according to any one of the claims 1 to 7 or produced according to any one of the claims 8 to 12 as a hydrophone detector element.
